# EUROPÄISCHE PATENTSCHRIFT

(11) **EP 1 205 132 B1**
(45) Veröffentlichungstag und Bekanntmachung des Hinweises auf die Patenterteilung: **07.05.2008**
(21) Anmeldenummer: 01126838.0
(22) Anmeldetag: 10.11.2001
(51) Int. Cl.: A47C 27/14, A47C 27/16

(54) **Schaumstoffelement mit Verstärkungsschicht**
Foamed element with reinforcing layer
Elément en mousse avec couche de renforcement

(30) Priorität: 10.11.2000 DE 20019160 U
(43) Veröffentlichungstag der Anmeldung: 15.05.2002
(73) Patentinhaber: Mankau, Dieter, Prof., 60316 Frankfurt (DE)
(72) Erfinder: Mankau, Dieter, Prof., 60316 Frankfurt (DE)
(74) Vertreter: Jochem, Bernd

(56) Entgegenhaltungen:
- AT-B- 370 603
- CH-A- 407 451
- US-A- 4 080 675
- US-A- 4 229 847

## Beschreibung

Die Erfindung betrifft ein Schaumstoffelement, insbesondere für Matratzen und Sitzmöbel aus PU-Schaum oder Latex mit einer Einlage aus Schichtmaterial.

Matratzen oder Sitzmöbel haben üblicherweise einen Kern aus Schaumstoff, der mit einem Überzug versehen ist. Zur Einstellung örtlich unterschiedlicher Härtegrade ist es bekannt, verschiedene Einsatzteile in die Matratze einzusetzen oder Hohlräume in der Matratze vorzusehen. Zu diesem Zweck werden Matratzenteile mit Ausnehmungen hergestellt, die schichtweise aufeinandergelegt und miteinander verklebt werden. Auf diese Weise werden Hohlräume geschaffen in die, je nach Bedarf, Einsatzteile unterschiedlicher Härte eingelegt werden können. Diese Art der Herstellung ist wegen des vielschichtigen Aufbaus der Matratze relativ kompliziert

Aus der US 4 080 675 ist ein Kissen der eingangs bezeichneten Art für Sitzmöbel bekannt, das aus zwei getrennten, übereinander gelegten Schaumstoffteilen mit passendem Umriß, einer zwischen diesen angeordneten Einlage, die eine Zwischenschicht aus Schaumstoff bildet, und einem Bezug besteht. Die Einlage reicht nicht bis zu den Seitenflächen des Kissens. Sie hat die Funktion, dem Kissen im mittleren Bereich eine pralle, ausgewölbte Form zu geben.

Es ist daher die Aufgabe der vorliegenden Erfindung, ein Schaumstoffelement zu schaffen, das trotz geringer Dichte des Grundelements insgesamt eine hohe Festigkeit aufweist und das einfach herzustellen ist.

Gelöst wird diese Aufgabe durch die im Anspruch 1 angegebenen Merkmale. Weitere Ausführungsformen ergeben sich aus den Unteransprüchen.

Im Falle einer Matratze kann z. B. eine hohe Matratzenhärte trotz eines ansonsten relativ wenig dichten Grundmaterials dadurch erreicht werden, dass in das Schaumstoffelement ein Schichtmaterial, wie z.B. Tuch, Filz, Flies, Latex oder Kunststoffgewebe eingelegt wird, das dem Schaumstoffelement eine höhere Druckfestigkeit verleiht.

Das Schichtmaterial wird bei der Herstellung des neuen Schaumstoffelements an der gewünschten Position in der Form gehalten und vom Material für das Element umschäumt. Weitere Arbeitsschritte, wie das Aufeinanderschichten einzelner Matratzenlagen und das Verkleben dieser Lagen sind dabei nicht mehr erforderlich, da der Schaumstoff das Schichtmaterial einstückig umschliesst.

Als Schichtmaterial können neben den bereits genannten Materialien auch Gitterstrukturen mit Längs- und Quersträngen, insbesondere aus Kunststoff, in das Schaumstoffelement eingesetzt werden. Auch einzelne Bänder, die vorzugsweise in Querrichtung der Matratze angeordnet sind, sind zur Versteifung der Matratze geeignet. Das Schichtmaterial besteht vorzugsweise aus Kunststoff und kann elastisch sein.

Je nach Körperzone bzw. Höhe der zu erwartenden Belastung können die Quer und Längsstränge der Gitterstruktur bzw. die einzelnen Bänder in unterschiedlichen Abständen voneinander angeordnet sein.

Die Härte des Schaumstoffelements hängt jedoch nicht allein von der Struktur oder Elastizität des gewählten Schichtmaterials, sondern im wesentlichen auch vom Ort der Anbringung des Schichtmaterials ab. Dabei ist die wesentliche Grösse der Abstand des Schichtmaterials von der Oberseite, also der Liege- bzw. Sitzfläche. Zur Erzeugung einer ergonomischen Festigkeitsverteilung des Schaumstoffelements kann daher das Schichtmaterial je nach Körperzone unterschiedlich tief eingelegt sein.

Das eingelegte Schichtmaterial muss nicht über die gesamte Fläche des Schaumstoffelements angeordnet sein und muss auch nicht bis zum Aussenrand des Elements reichen. In der Regel ist es ausreichend, wenn nur bestimmte Zonen des Schaumstoffelements verstärkt werden.

Eine noch höhere Festigkeit des Schaumstoffelements kann erreicht werden, wenn das Schichtmaterial unter Vorspannung umschäumt oder dauerhaft unter Spannung gehalten wird. So können z.B. einzelne Stränge einer Gittereinlage oder einzelne Bänder unter Vorspannung, insbesondere an den Außenseiten des Schaumstoffelements, verankert sein. Zu diesem Zweck sind Halte- und Spannmittel vorgesehen, die das verwendete Schichtmaterial dauerhaft unter Vorspannung halten. Als derartige Halte- und Spannmittel kommen insbesondere Plättchen oder Haken in Betracht. Die Verstärkungsschicht kann aber auch in einem Rahmen, insbesondere einem Holzrahmen, eingespannt sein, der vorzugsweise ebenfalls mit eingeschäumt wird. Der Rahmen kann entweder einteilig gestaltet sein und im wesentlichen die Grösse des Schaumstoffelements aufweisen oder aus mehreren Einzelrahmen bestehen.

Bei einer Ausgestaltung der Erfindung sind Spannschnüre am Schichtmaterial vorgesehen, mittels denen es zumindest beim Schäumen unter Vorspannung gehalten wird. Wenn die Spannschnüre elastisch sind, ziehen sie sich nach dem Kappen ins Innere des Schaumstoffelements zurück und sind somit von Aussen unsichtbar. Die kleinen Eintrittskanäle schliessen sich aufgrund der Elastizität des Schaumstoffmaterials von selbst. Um das Schichtmaterial in der gewünschten Lage zu platzieren, kann eine Art Nadelbett mit mehreren Haltenadeln bzw. - stiften vorgesehen sein, auf dem das Schichtmaterial positioniere wird. Das Nadelbett wird, nachdem das Schaumstoffmaterial ausgebreitet ist, wieder aus dem Schaumstoff herausgezogen. Dadurch verbleiben nadelförmige Kanäle im Schaumstoff, die als Lüftungskanäle dienen. Um durch das Schaumstoffelement hindurchgehende Lüftungswege zu schaffen, können auf beiden Seiten des Elements Nadeln bzw. Stifte angeordnet sein, die nach dem Aushärten des Schaumstoffmaterials aus dem Element herausgezogen werden. Die Stifte sind vorzugsweise oben und unten fluchtend angeordnet, so dass sich ein von Seite zu Seite durchgängiger Luftdurchtrittsweg ergibt.

Am Schichtmaterial können diverse Zusatzelemente befestigt werden, wie z.B. einzelne Hohlkörper oder eine Luftkammerfolie. Die Luftkammern der Luftpolsterfolie werden vorzugsweise in den Öffnungen der Gitterstruktur angeordnet. Bei einem mit Hohlkörpern ausgestatteten Schaumstoffelement ist die Verstärkungsschicht vorzugsweise auf der Sitz- bzw. Liegeseite oberhalb der Hohlkörper angeordnet, um in bestimmten Bereichen des Sitzes bzw. der Matratze eine definierte Härte einzustellen.

Die Verstärkungsschichten können auch mehrschichtig übereinander, insbesondere auch nicht symmetrisch bezüglich einer Mittelebene des Schaumstaffelements, angeordnet sein. Bei asymmetrischer Anordnung erhält man eine Wendematratze mit unterschiedlichen Härten auf den jeweiligen Seiten.

Zwischen den einzelnen Verstärkungsschichten können wiederum Hohlräume vorgesehen sein. Die Verstärkungsschichten können darüber hinaus aus verschiedenen Materialien bestehen oder je nach Anwendungsfall eine unterschiedliche Struktur aufweisen.

Die Erfindung wird nachstehend anhand der beigefügten Zeichnungen beispielhaft näher erläutert. Es zeigen:
- Fig. 1: eine perspektivische Ansicht eines erfindungsgemässen Schaumstoffelements mit einer eingelegten Gitterstruktur;
- Fig. 2: eine perspektivische Ansicht einer anderen Ausgestaltung des erfindungsgemässen Schaumstoffelements mit einer eingelegten Gitterstruktur;
- Fig. 3: ein erfindungsgemässes Schaumstoffelement mit eingelegter Luftpolsterfolie;
- Fig. 4: ein erfindungsgemässes Schaumstoffelement mit eingelegten Bändern;
- Fig. 5: eine Seitenansicht eines erfindungsgemässen Schaumstoffelements mit Luftdurchgangskanälen;
- Fig. 6: einen Längsschnitt durch ein Schaumstoffelement mit Verstärkungsschicht und Hohlräumen;
- Fig. 7: einen Längsschnitt durch ein Schaumstoffelement mit mehrlagigen Verstärkungsschichten und Hohlräumen zwischen den Verstärkungsschichten;
- Fig. 8: eine in einem Rahmen eingespannte Verstärkungsschicht zur Verwendung in einem erfindungsgemässen Schaumstoffelement.

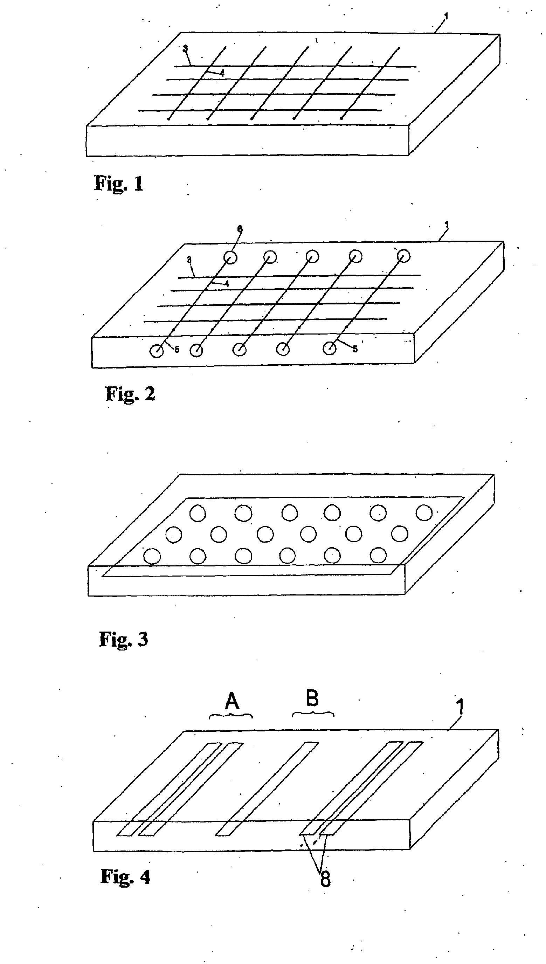

Das in Fig. 1 dargestellte Schaumstoffelement umfasst einen Schaumstoffkörper 1, in den eine Gitterstruktur, bestehend aus Längs- und Quersträngen 3, 4 eingesetzt ist. Die Gitterstruktur verläuft in einer zur Oberfläche des Schaumstoffkörpers parallelen Ebene nahezu über die gesamte Länge bzw. Breite des Schaumstoffkörpers. Die Längs- und Querstränge 3,4 sind in gleichbleibenden Abständen voneinander angeordnet.

Die in Fig. 2 gezeigte Gitterstruktur besteht aus einem im wesentlichen nichtelastischen Material und wird durch Verankerungsplättchen 6 an den Längsseiten des Körpers 1 in Querrichtung unter Vorspannung gehalten. Die Längsstränge 3 der Gitterstruktur sind dagegen nicht vorgespannt.

Zumindest an einem Ende der Querstränge 4 sind elastische Spannschnüre 5 befestigt, mit denen die Gittereinlage vorgespannt ist.

Die Herstellung eines solchen Schaumstoffelements erfolgt durch Umschäumen eines entsprechenden Schichtmaterials, im vorliegenden Fall der Gitterstruktur, wodurch ein einstückiger Schaumstoffkörper 1 entsteht.

Bei der in Fig. 2 dargestellten Gittereinlage sind die Längs-und Querstränge 3, 4 in gleichmäßigen Abständen angeordnet. Zur Erzeugung einer unterschiedlichen Festigkeitsverteilung können die Abstände variiert oder das Schichtmaterial je nach Körperzone in unterschiedlichen Abständen zur Oberfläche angeordnet werden.

Fig. 3 zeigt einen Schaumstoffkörper 1 mit eingelegter Luftpolsterfolie 7. Während der Herstellung des Schaumstoffelements wird die Luftpolsterfolie 7 auf einer Halterung, vorzugsweise in Form eines Nadelbetts, gehalten und ebenfalls von Schaumstoffmaterial umschäumt. Die Luftblasen der Folie 7 sind dabei so stark ausgebildet, dass sie dem Druck beim Schäumen standhalten.

Bei großflächigen Folienstücken ist es sinnvoll, in bestimmten Abständen Durchbrüche vorzusehen, um eine Verbindung des Schaumstoffmaterials oberhalb und unterhalb der Einlage zu ermöglichen. Anderenfalls würden sich die Schichten voneinander abheben. Das in Fig. 4 dargestellte Schaumstoffelement umfasst einen Schaumstoffkörper 1 mit in Querrichtung eingelegten Bändern 8 z.B. aus Filz, Vlies, Tuch oder Kunststoff.

Zur Anpassung an unterschiedlich starke Belastungen sind die einzelnen Bänder 8 in verschiedenen Abständen angeordnet. Im Kopfbereich A ist der Abstand zwischen den einzelnen Bändern 8 geringer als z.B. im Schulterbereich B, in dem der Körper tiefer einsinken muss, um eine ergonomische Haltung einzunehmen.

Auch bei dieser Ausgestaltung können die Bänder wahlweise vorgespannt sein.

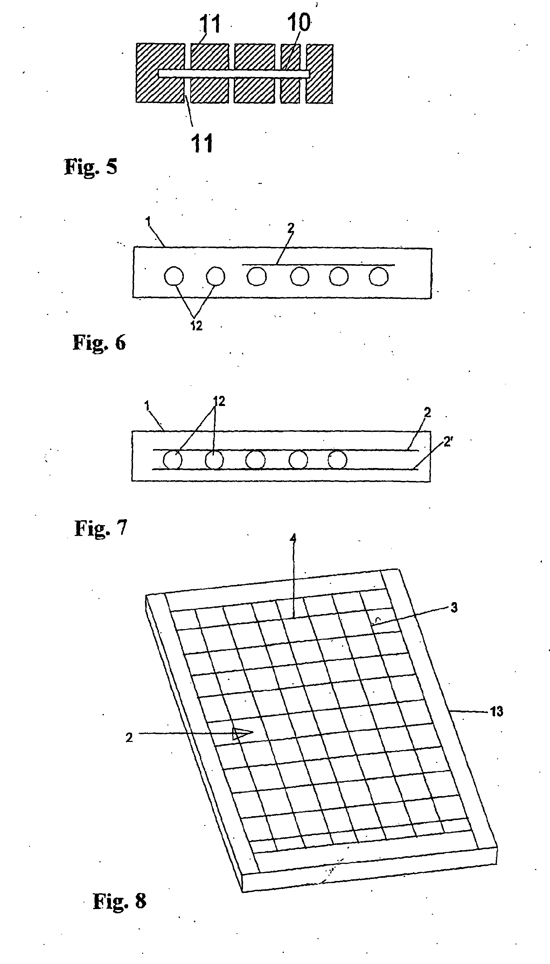

Das in Fig. 5 dargestellte Schaumstoffelement hat mehrere Luftdurchlasskanäle 11, die an der Ober- und Unterseite fluchtend angeordnet sind. Die Kanäle 11 erstrecken sich bis zu einer Verstärkungsschicht 10, die vorzugsweise aus einem luftdurchlässigen Material besteht oder an den Stellen der Luftdurchgangskanäle 11 Ausnehmungen hat. Dadurch entstehen durch das Schaumstoffelement hindurchgehenden Lüftungswege, die einen Abtransport von Feuchtigkeit aus dem Inneren der Matratze nach außen ermöglichen.

Fig. 6 zeigt ein Schaumstoffelement 1 mit mehreren Hohlräumen 12 und einer Verstärkungsschicht 2, die wenigstens in bestimmten Zonen der Matratze oberhalb der Hohlräume 12 angeordnet ist, um in diesem Bereich die Matratze zu verstärken.

Die in Fig. 7 gezeigte Matratze hat mehrere Lagen von Schichtmaterial 2, 2', die in diesem Beispiel asymmetrisch bezüglich einer Mittelebene angeordnet sind. Dadurch entsteht eine Wendematratze mit unterschiedlich harten Liegeflächen. Zwischen den Verstärkungsschichten können wiederum Hohlräume 12 angeordnet sein.

Bei einer anderen Ausgestaltung der Erfindung enthält das erfindungsgemässe Schaumstoffelement einen in Fig. 8 dargestellten Rahmen 13, in den ein Gitter als Schichtmaterial 2 eingespannt ist. Der Rahmen 13 hat in etwa die Grösse der Matratze und wird zusammen mit dem Schichtmaterial 2 vom Schaumstoff der Matratze umschäumt. Wahlweise kann der Rahmen auch ausserhalb der Matratze angeordnet werden.

## Patentansprüche

1. Schaumstoffelement, insbesondere für Matratzen und Sitzmöbel aus PU-Schaum oder Latex mit einer Einlage aus Schichtmaterial, **dadurch gekennzeichnet, dass** das Schichtmaterial (2) in ein einstückiges Schaumstoffelement (1) eingeschäumt ist.

2. Schaumstoffelement nach Anspruch 1, **dadurch gekennzeichnet, daß** das Schichtmaterial (2) folienartig ist oder aus Gewebe besteht.

3. Schaumstoffelement nach Anspruch 1 oder 2, **dadurch gekennzeichnet**, das das Schichtmaterial (2) eine Gitterstruktur mit Längs- und Quersträngen (3, 4) hat.

4. Schaumstoffelement nach Anspruch 3, **dadurch gekennzeichnet, daß** wenigstens ein Teil der Längs- oder Querstränge (3,4) elastisch ist.

5. Schaumstoffelement nach Anspruch 1, **dadurch gekennzeichnet, daß** mehrere Bänder (8), insbesondere in Querrichtung einer Matratze, angeordnet sind.

6. Schaumstoffelement nach einem der vorhergehenden Ansprüche, **dadurch gekennzeichnet, daß** das Schichtmaterial (2) unter Vorspannung in das Schaumstoffelement (1) eingebracht ist.

7. Schaumstoffelement nach Anspruch 3 oder 4, **dadurch gekennzeichnet, daß** der Gitterabstand der einzelnen Stränge (3, 4) je nach Körperzone unterschiedlich ist.

8. Schaumstoffelement nach einem der vorhergehenden Ansprüche, **dadurch gekennzeichnet, daß** der Abstand des Schichtmaterials (2) von der Oberseite des Schaumstoffelements (1) je nach Körperzone unterschiedlich ist.

9. Schaumstoffelement nach einem der vorhergehenden Ansprüche, **dadurch gekennzeichnet, daß** das Schichtmaterial (2) im Schaumstoffelement (1) oder an den Seiten des Schaumsstoffelement (1) verankert ist.

10. Schaumstoffelement nach einem der vorhergehenden Ansprüche, **dadurch gekennzeichnet, daß** das Schichtmaterial (2) beim Schäumen durch Spannschnüre gehalten ist, die nach dem Kappen ins Innere des Schaumstoffelements (1) zurückgezogen sind.

11. Schaumstoffelement nach einem der vorhergehenden Ansprüche, **dadurch gekennzeichnet, daß** das Schichtmaterial (2) auf Stiften gehalten ist, die nach dem Aushärten des Materials herausgenommen sind.

12. Schaumstoffelement nach einem der vorhergehenden Ansprüche, **dadurch gekennzeichnet, daß** auf beiden Seiten des Schichtmaterials (10) Lüftungskanäle (11) gebildet sind.

13. Schaumstoffelement nach einem der vorhergehenden Ansprüche, **dadurch gekennzeichnet, daß** das Schichtmaterial (2, 2') in mehreren Lagen, insbesondere asymmetrisch bezüglich einer Mittelebene, übereinander angeordnet ist.

14. Schaumstoffelement nach einem der vorhergehenden Ansprüche, **dadurch gekennzeichnet, daß** das Schaumstoffelement (1) Hohlräume (12) umfasst.

15. Schaumstoffelement nach einem der vorhergehenden Ansprüche, **dadurch gekennzeichnet, daß** das Schichtmaterial (2) zumindest in bestimmten Bereichen oberhalb der Hohlräume angeordnet ist.

16. Schaumstoffelement nach einem der vorhergehenden Ansprüche, **dadurch gekennzeichnet, daß** das Schichtmaterial (2) in einem Rahmen (13) eingespannt ist.

17. Schaumstoffelement nach Anspruch 16, **dadurch gekennzeichnet, daß** der Rahmen (13) im Schaumstoffelement (1) eingeschäumt ist.

## Claims

1. A foam material element, in particular for mattresses and seating furniture, consisting of PU foam or latex with an insert of layer material, **characterised in that** the layer material (2) is foamed into place in a one-piece foam material element (1).

2. A foam material element according to Claim 1,
**characterised in that** the layer material (2) is sheet-like or consists of fabric.

3. A foam material element according to Claim 1 or 2,
**characterised in that** the layer material (2) has a lattice structure with longitudinal and transverse strands (3,4).

4. A foam material element according to Claim 3,
**characterised in that** at least one part of the longitudinal and transverse strands (3,4) is elastic.

5. A foam material element according to Claim 1,
**characterised in that** a plurality of strips (8) are provided, in particular in the transverse direction of a mattress.

6. A foam material element according to any one of the preceding Claims, **characterised in that** the layer material (2) is incorporated into the foam material element under pretensioning.

7. A foam material element according to Claim 3 or 4,
**characterised in that** the lattice spacing of the individual strands (3,4) is different depending on the body zone.

8. A foam material element according to any one of the preceding Claims, **characterised in that** the spacing of the layer material (2) from the upper side of the foam material element (1) is different depending on the body zone.

9. A foam material element according to any one of the preceding Claims, **characterised in that** the layer material (2) is anchored in the foam material element (1) or to the sides of the foam material element (1).

10. A foam material element according to any one of the preceding Claims, **characterised in that**, during the foaming process, the layer material (2) is held by tensioning cords which, after being cut off, are retracted into the inside of the foam material element (1).

11. A foam material element according to any one of the preceding Claims, **characterised in that** the layer material (2) is held on pins which are removed after the curing of the material.

12. A foam material element according to any one of the preceding Claims, **characterised in that** ventilation passages (11) are formed on either side of the layer material (10).

13. A foam material element according to any one of the preceding Claims, **characterised in that** the layer material (2,2') is arranged superimposed in several layers, in particular asymmetrically in relation to a centre plane.

14. A foam material element according to any one of the preceding Claims, **characterised in that** the foam material element (1) comprises hollow spaces (12).

15. A foam material element according to any one of the preceding Claims, **characterised in that**, at least in certain zones, the layer material (2) is arranged above the hollow spaces.

16. A foam material element according to any one of the preceding Claims, **characterised in that** the layer material (2) is clamped in a frame (13).

17. A foam material element according to Claim 16,
**characterised in that** the frame (13) is foamed into place in the foam material element (1).

## Revendications

1. Elément de mousse, notamment pour des matelas et des sièges en mousse de polyuréthane PU ou de latex avec un insert en un matériau stratifié,
**caractérisé en ce que**
le matériau stratifié (2) est intégré par expansion dans un élément de mousse en une seule pièce.

2. Elément de mousse selon la revendication 1,
**caractérisé en ce que**
la matière stratifiée (2) est en forme de film ou de tissu.

3. Elément de mousse selon les revendications 1 ou 2,
**caractérisé en ce que**
le matériau stratifié (2) a une structure en réseau avec des brins longitudinaux et des brins transversaux (3, 4).

4. Elément de mousse selon la revendication 3,
**caractérisé en ce qu'**
au moins une partie des brins longitudinaux ou des brins transversaux (3, 4) est élastique.

5. Elément de mousse selon la revendication 1,
**caractérisé en ce que**
plusieurs brins (8) sont installés notamment dans la direction transversale d'un matelas.

6. Elément de mousse selon l'une des revendications précédentes,
**caractérisé en ce que**
la matière stratifiée (2) est introduite dans l'élément de mousse (1) à l'état précontraint.

7. Elément de mousse selon les revendications 2 ou 3,
**caractérisé en ce que**
l'intervalle de réseau des différents brins (3, 4) est différent suivant la zone du corps.

8. Elément de mousse selon l'une des revendications précédentes,
**caractérisé en ce que**
la distance entre la matière stratifiée (2) et la face supérieure de l'élément de mousse (1) est différente selon la zone du corps.

9. Elément de mousse selon l'une des revendications précédentes,
**caractérisé en ce que**
l'élément stratifié (2) est accroché dans l'élément de mousse (1) ou sur les côtés de l'élément de mousse (1).

10. Elément de mousse selon l'une des revendications précédentes,
**caractérisé en ce que**
la matière stratifiée (2) est tenue pendant l'expansion par des cordons de serrage qui sont rétractés vers l'intérieur de l'élément en mousse (1) après leur coupe.

11. Elément de mousse selon l'une des revendications précédentes,
**caractérisé en ce que**
le matériau stratifié (2) est tenu sur des broches qui sont extraites de la matière après sa prise.

12. Elément de mousse selon l'une des revendications précédentes,
**caractérisé en ce que**
des deux côtés de la matière stratifiée (10) on a des canaux d'aération (11).

13. Elément de mousse selon l'une des revendications précédentes,
**caractérisé en ce que**
la matière stratifiée (2, 2') est superposée en plusieurs couches, notamment de façon asymétrique par rapport à un plan médian.

14. Elément de mousse selon l'une des revendications précédentes,
**caractérisé en ce que**
l'élément en mousse (1) comporte des cavités (12).

15. Elément, de mousse selon l'une quelconque des revendications précédentes,
**caractérisé en ce que**
au moins dans certaines zones la matière stratifiée (2) est prévue au-dessus des cavités.

16. Elément de mousse selon l'une des revendications précédentes,
**caractérisé en ce que**
la matière stratifiée (2) est serrée dans un cadre (13).

17. Elément de mousse selon la revendication 16,
**caractérisé en ce que**
le cadre (13) est intégré par expansion dans l'élément de mousse (1).
